(19) Europäisches Patentamt
European Patent Office
Office européen des brevets

(11) EP 3 953 406 B1

(12) **EUROPEAN PATENT SPECIFICATION**

(45) Date of publication and mention of the grant of the patent:
**21.02.2024 Bulletin 2024/08**

(21) Application number: **20720960.2**

(22) Date of filing: **23.03.2020**

(51) International Patent Classification (IPC):
***C08G 18/10*** (2006.01) ***C08G 18/48*** (2006.01)
***C08G 18/76*** (2006.01) ***C09J 175/08*** (2006.01)
***C08G 18/50*** (2006.01) ***C08G 18/54*** (2006.01)

(52) Cooperative Patent Classification (CPC):
(C-Sets available)
**C08G 18/7664; C08G 18/10; C08G 18/4825; C08G 18/4841; C08G 18/4854; C08G 18/5033; C08G 18/546; C09J 175/08;** C08G 2190/00 (Cont.)

(86) International application number:
**PCT/US2020/024198**

(87) International publication number:
**WO 2020/210012 (15.10.2020 Gazette 2020/42)**

(54) **POLYURETHANE AND PROCESS FOR MAKING**

POLYURETHAN UND VERFAHREN ZUR HERSTELLUNG DAVON

POLYURÉTHANE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2019 US 201962831100 P**

(43) Date of publication of application:
**16.02.2022 Bulletin 2022/07**

(73) Proprietor: **Dow Global Technologies LLC**
**Midland, MI 48674 (US)**

(72) Inventors:
- **KRISHNAN, Bindu**
  **Lake Jackson, Texas 77566 (US)**
- **AGARWAL, Praveen**
  **Lake Jackson, Texas 77566 (US)**
- **HARRIS, William J.**
  **Lake Jackson, Texas 77566 (US)**
- **XU, Qiuyun**
  **Lake Jackson, Texas 77566 (US)**
- **DUGGAL, Rajat**
  **Lake Jackson, Texas 77566 (US)**

(74) Representative: **Beck Greener LLP**
**Fulwood House**
**12 Fulwood Place**
**London WC1V 6HR (GB)**

(56) References cited:
**GB-A- 1 150 508**
**US-A- 3 655 619**
**US-A- 5 059 670**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 953 406 B1

(52) Cooperative Patent Classification (CPC): (Cont.)

C-Sets
**C08G 18/10, C08G 18/3819;**
**C08G 18/10, C08G 18/48;**
**C08G 18/10, C08G 18/54**

## Description

This invention relates to polyurethanes and methods for manufacturing them.

Elastomeric polyurethanes are used widely in a large array of coating, adhesive, sealant and elastomer ("CASE") applications.

The polyurethane is in many cases a reaction product of an organic polyisocyanate, a hydroxyl-terminated chain extender and a polyether polyol that has a hydroxyl equivalent weight of greater than 250. The polyether polyol often has secondary hydroxyl groups that react slowly towards isocyanate groups. For this reason, the reaction is usually catalyzed. The most prevalent urethane catalysts are metal catalysts such as tin, mercury and zinc catalysts, and low molecular weight amine catalysts such as certain tertiary amines and diaza compounds. In general, these catalysts have been found to be necessary to provide curing rates that are economically feasible.

There are important reasons why it would be beneficial to eliminate the catalysts in some cases. Costs would be reduced if catalysts were not needed. Many metal catalysts have been associated with environmental and/or health and safety concerns.

Several problems are associated with amine catalysts. They often are hygroscopic and sometimes are moisture-sensitive. Non-reactive, low molecular weight amine catalysts are often somewhat volatile and can contribute to odor and the presence of volatile organic compounds (VOCs) in the product. In addition, the presence of an amine catalyst often reduces the shelf life of the precursors, isocyanate-terminated prepolymers in particular.

In addition, catalyst residues in the polyurethane can catalyze depolymerization reactions, particularly at higher temperatures. These higher temperatures are sometimes encountered during the normal use of the cured product. Sometimes the polyurethane is used in a high temperature environment or becomes exposed to transient temperature excursions. In other cases the polyurethane is used in a dynamic application in which external and internal friction can heat the polymer to high temperatures. Exposure to high temperature can result in depolymerization that reduces performance or leads to material failure US 3 655 619 A discloses water-dispersible treating agents in form of Mannich polyol-based polyurethanes, which can also be used for coatings and adhesives.

GB 1 150 508 A discloses a fibre-reinforcing resin in form of a Mannich polyol-based polyurethane and US 5 059 670 A discloses a thermosetting composition based on a Mannich polyol and a polyisocyanate.

A method for making a polyurethane in the substantial absence of metallic and/or low molecular weight amine urethane catalysts is desired. The method should produce a polyurethane having good properties and good elevated temperature stability, in a reasonably short curing time. The polyurethane produced in the process preferably has good high temperature properties.

This invention is in one aspect a polyurethane polymer having a density of at least 750 kg/$m^3$ that is the reaction product of reactants that comprise:

a) at least one organic polyisocyanate and
b) polyols comprising

b-1) one or more polyols having a hydroxyl equivalent weight of greater than 250 g/mol and a nominal hydroxyl functionality of 2 to 4 and
b-2) one or more polyols having a hydroxyl equivalent weight of up to 250, wherein at least 50% by weight of b-2) is at least one alkoxylated Mannich base having an average hydroxyl functionality of 2 to 7;

wherein the isocyanate index in a final curing step is 90 to 150; and

wherein the hard segment content of the polyurethane polymer is 20 to 80% by weight of the polyurethane polymer.

The invention is also a process for making a polyurethane polymer, comprising reacting, in one or more steps that include a final curing step in which the isocyanate index is 90 to 150, reactants comprising

a) at least one organic polyisocyanate; and
b) polyols comprising b-1) at least one polyol having a hydroxyl equivalent weight of greater than 250 g/mol, and b-2) one or more polyols having a hydroxyl equivalent weight of up to 250, wherein at least 50% by weight of b-2) is at least one alkoxylated Mannich base having an average hydroxyl functionality of 2 to 7;
wherein the hard segment content of the polyurethane polymer is 20 to 80% by weight of the polyurethane polymer and the density of the polyurethane polymer is at least 750 kg/$m^3$.

The invention has important advantages. The reaction of the alkoxylated Mannich base towards isocyanate groups proceeds at commercially useful rates even in the absence of a metallic and/or amine urethane catalysts; accordingly such catalysts can be eliminated or used only in very small quantities. The polyurethane polymer has good mechanical and thermal properties, in some cases better than otherwise like polymers that are made with other crosslinking agents or curatives that do not contain amine groups. Polyurethanes having very low void volumes can be produced. The thermal properties of the polymer are surprisingly good.

The organic polyisocyanate preferably has an average functionality about 1.9 to 4, and more preferably 2.0 to 3.0, 2.0 to 2.5 or 2.0 to 2.3. In some embodiments, the average isocyanate equivalent weight can be from about 80 to 250, more preferably from 80 to 200 and still more preferably from 125 to 175. The organic polyisocyanate can be aromatic, aliphatic and/or cycloaliphatic. Examples of polyisocyanates include m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI ($H_{12}$ MDI), naphthylene-1,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane triisocyanate, polymethylene polyphenylisocyanates, hydrogenated polymethylene polyphenylisocyanates, toluene-2,4,6-triisocyanate, and 4,4'-dimethyl diphenylmethane-2,2',5,5'-tetraisocyanate. Preferred polyisocyanates include MDI and derivatives of MDI such as biuret-, uretonimine- and/or carbodiimide-modified "liquid" MDI products and polymeric MDI. "Polymeric MDI" is a mixture of MDI (any isomer or mixture of isomers) with one or more polymethylene polyphenylisocyanates that have three or more phenylisocyanate groups. The "Polymeric MDI" may have, for example, an isocyanate equivalent weight of 126 to 150 and a number average isocyanate functionality of 2.05 to 3.5, especially 2.2 to 3.2 or 2.2 to 2.8. The "liquid" MDI may have an average functionality of 2.01 to 2.2 and an isocyanate equivalent weight of 126 to 150, especially 140 to 150.

A mixture of two or more organic polyisocyanates may be used.

The polyols b) include b-1) one or more polyols having a hydroxyl equivalent weight of greater than 250 g/mol and a nominal hydroxyl functionality of 2 to 4.

In some embodiments, a polyol b-1) may have a hydroxyl equivalent weight of at least 400, at least 450, at least 500, at least 700 or at least 900, and up to 5000, up to 4000, up to 3000, up to 2000, up to 1500 or up to 1200. The nominal hydroxyl functionality of a polyol b-1) in some embodiments is 2 to 3.

The polyol b-1) in some embodiments is one or more polyethers. Such a polyether may be a homopolymer of an alkylene oxide such as ethylene oxide, 1,2-propylene oxide, 1,2-butylene oxide, 2,3-butylene oxide and tetrahydrofuran, or a copolymer of two or more alkylene oxides. If a copolymer, a polyether polyol b-1) may be a block and/or random copolymer as well as a capped copolymer. Homopolymers of propylene oxide, copolymers of propylene oxide with up to 20% by weight ethylene oxide, based on the weight of all alkylene oxides, and random and/or block copolymers of propylene oxide and butylene oxide are useful.

Other useful polyols b-1) include polyester polyols, hydroxyl-terminated poly(butadiene) polyols, polyacrylate polyols and the like, having hydroxyl functionalities and hydroxyl equivalent weights as described above.

In some embodiments, at least 50%, at least 70% or at least 80% of the hydroxyl groups of the b-1) polyol are secondary hydroxyl groups.

The b-2) polyols have a hydroxyl equivalent weight of up to 250. The b-2 polyol equivalent weight in some embodiments is up to 200, up to 150, or up to 130. At least 50% by weight of b-2) is at least one alkoxylated Mannich base has an average hydroxyl functionality of 2 to 7, preferably 3 to 5. The alkoxylated Mannich base may constitute at least 75%, at least 90%, at least 95% or at least 99% of the total weight of all b-2) polyols, and may be the sole b-2) polyol.

The alkoxylated Mannich base is an alkoxylated reaction product of a phenol, formaldehyde and an alkanolamine. The alkanolamine may be, for example, a dialkanolamine such as diethanolamine, ethanolisopropanolamine, ethanol-2-hydroxybutylamine, diisopropanolamine, isopropanol-2-hydroxybutylamine, diisobutanolamine, isopropanol-2-hydroxyhexylamine, ethanol-2-hydroxyhexylamine and the like, an N-substituted monoalkanolamine such as N-methyl ethanolamine, N-ethyl ethanolamine, N-methyl isopropanolamine, N-ethyl isopropanolamine, N-methyl-2-hydroxybutylamine, N-phenylethanolamine, and the like, or a monoalkanolamine such as monethanolamine or monoisopropanol amine.

The phenol is a compound having at least one hydroxyl group bonded directly to a ring carbon of an aromatic ring. The phenol may be phenol itself, a substituted phenol or a polyphenol that also may be substituted. A substituted phenol or polyphenol may be substituted with, for example, one or more hydrocarbyl groups having 1 to 18 carbon atoms. Any such hydrocarbyl group may be linear, branched and/or cyclic and may be saturated or unsaturated. Of particular interest are alkyl groups, and alkenyl groups having one or more carbon-carbon double bonds. Examples of the phenol compound include phenol, cresol, xylenol, catechol, propyl phenol, butyl phenol, amyl phenol, heptylphenol, octylphenol, nonyl phenol, dodecylphenol, cardanol, cardol, methyl cardol, para-phenyl phenol and the like.

The phenol, formaldehyde and alkanolamine engage in a condensation reaction to form a Mannich base that contains hydroxyl groups (one phenolic and one or more aliphatic). The hydroxyl groups of the Mannich base are alkoxylated to produce the alkoxylated Mannich base.

In some embodiments, the alkoxylated Mannich base is represented by the structure:

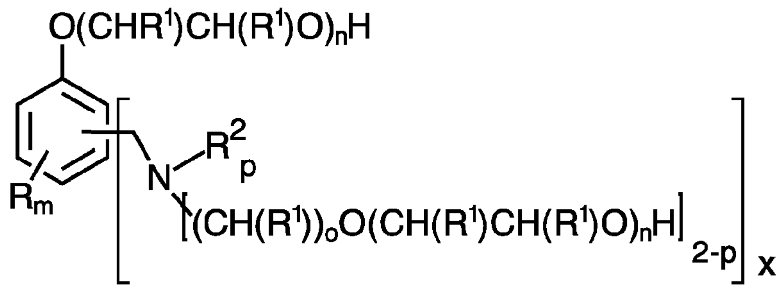

wherein each R is independently hydrogen, linear or branched alkyl having 1 to 18 carbon atoms or linear or branched alkenyl having 1 to 18 carbon atoms, m is a number from 0 to 2, each $R^1$ is independently hydrogen or linear or branched alkyl having 1 to 6, preferably 1 to 2, carbon atoms, each n is a number such that the hydroxyl equivalent weight is up to 250, x is a number from 1 to 3, $R^2$ is hydrogen, alkyl having 1 to 6, preferably 1 to 3 carbon atoms, benzyl or phenyl, o is a number from 1 to 4, and p is 0 or 1. R preferably is $C_{6-16}$ alkyl, especially $C_{6-12}$ alkyl, each $R^1$ independently is preferably hydrogen or methyl, and each n is preferably 1 or 2. p is preferably zero. m is preferably 1. o is preferably 1 to 2. x is preferably 1 or 2. Each $R^2$, when present, preferably is $C_{1-3}$ alkyl.

In some embodiments, the alkoxylated Mannich base is a propoxylated and/or ethoxylated Mannich base, wherein the Mannich base is a condensation product of an alkyl phenol or alkenyl phenol in which the alkyl or alkenyl group has 1-18 carbon atoms, formaldehyde and diethanolamine, and in which x is such that the average functionality of the alkoxylated Mannich base is 3 to 5 or 3 to 4.

Other b-2) polyols, when present, include compounds having 2 to 8, preferably 2 to 4 or 2 to 3, hydroxyl groups per molecule and having an equivalent weight as stated above. Examples of these include, for example, glycerin, ethylene glycol, propylene glycol, dipropylene glycol, diethylene glycol, sorbitol, volemitol, threitol, ribitol, mannitol, maltitol, iditol, fucitol, galactitol, arabitol, erythritol, pentaerythritol, trimethylolpropane, triisopropanolamine, triethanol amine and bis(hydroxylmethyl)piperazine, as well as alkoxylates thereof having equivalent weights of no greater than 250. Such other b-2) polyols preferably do not contain any amine groups. Amine groups for purposes of this invention are groups that contain a basic nitrogen atom with a lone electron pair.

Component b-2), and the alkoxylated Mannich base in particular, may constitute, for example, 5 to 60% of the total combined weight of components a), b-1) and b-2). In some embodiments the alkoxylated Mannich base constitutes 7.5 to 50% or 10 to 50% or 20 to 50% of the combined weights of components a), b-1) and b-2).

The reactants that produce the polyurethane of the invention may include (in addition to polyols b-1) and b-2)) one or more other isocyanate-reactive materials, such as, for example, compounds having molecular weights of greater than 350 which contain one or more primary and/or secondary amino groups, and compounds having two or more epoxide groups. If present at all, such other isocyanate-reactive materials preferably constitute no more than 10 weight percent, more preferably no more than 5 weight percent or no more than 2 weight percent of the total combined weight of all organic polyisocyanates and isocyanate-reactive ingredients. Such other isocyanate-reactive materials may be absent.

The polyurethane of the invention can be produced by reacting the organic polyisocyanate with the isocyanate-reactive compounds in one or more steps.

Thus, in one embodiment of the invention, the reaction is performed in a single step in which the organic isocyanate and all isocyanate-reactive compounds (including polyols b-1) and b-2) as described above) are all combined to form a reaction mixture that is then cured to form the polyurethane. In such an embodiment, the single step is the "final" curing step of the process, and the isocyanate index is from 90 to 150. "Isocyanate index" is 100 times the numerical ratio of isocyanate groups to isocyanate-reactive groups provided to the reaction mixture. The isocyanate index may be at least 95 or at least 98 and may be at most 135, at most 110, at most 105 or at most 102.

In an alternative embodiment, some or all of polyol b-1) is pre-reacted with the organic polyisocyanate to form a prepolymer or quasi-prepolymer, which contains isocyanate groups. The prepolymer or quasi-prepolymer may have an isocyanate content of, for example, 1 to 20 percent by weight. The isocyanate content in some embodiments is at least 2.5% or at least 4% and up to 15%, up to 12% or up to 10%. In a final curing step, the prepolymer or quasi-prepolymer is reacted with polyol b-2) and any remaining portion of polyol b-1) at an isocyanate index of 90 to 150 to produce the polyurethane. As before, the isocyanate index may be at least 95 or at least 98 and may be at most 135, at most 110, at most 105 or at most 102.

In yet another alternative embodiment, some or all of polyol b-2) is pre-reacted with the organic polyisocyanate to form a "hard segment" prepolymer or quasi-prepolymer that contains isocyanate groups. The hard-segment prepolymer or quasi-prepolymer may have an isocyanate content of, for example, 5 to 30 percent by weight. The isocyanate content of such a hard segment prepolymer in some embodiments is at least 7.5% or at least 10% and up to 25%, up to 22%

or up to 20%. In a final step, the hard segment prepolymer or quasi-prepolymer is reacted with polyol b-1) and any remaining portion of polyol b-2) at an isocyanate index of 90 to 150 to produce the polyurethane. Isocyanate index in the final curing step is as described with regard to the previous embodiments.

It is also possible, in a prepolymer process, to form the prepolymer by reacting the organic isocyanate with a mixture of polyols b-1) and b-2) followed by a final curing step in which the resulting prepolymer is reacted with remaining polyol b-1) and/or b-2) to form the polyurethane. Isocyanate index in the final curing step is as described with regard to the previous embodiments.

In any of the foregoing processes, the proportions of reactants are selected such that the polyurethane has a hard segment content of 20 to 80% by weight. The hard segment content is calculated as:

$$H.S.Content = 100\% \times \frac{Wt_{iso} + Wt_{ce}}{Wt_{reactants}}$$

where $Wt_{iso}$ is the weight of the starting polyisocyanate compounds; $Wt_{ce}$ is the weight of all starting isocyanate-reactive compounds (including polyol b-2) that have equivalent weights per isocyanate-reactive group of 250 or below, and $Wt_{reactants}$ is the total combined weight of all starting polyisocyanate compounds and all isocyanate-reactive compounds. In some embodiments, the hard segment content is at least 30% by weight and up to 65% by weight, up to 55% by weight or up to 50% by weight.

In preferred embodiments in which the only isocyanate-reactive compounds are polyols b-1) and b-2), the hard segment content is equal to:

$$100\% \times [(Wt_{iso} + Wt_{polyol\ b\text{-}2)}) \div \{Wt_{iso} + Wt_{polyol\ b\text{-}2)} + Wt_{polyol\ b\text{-}1)}\}].$$

An advantage of the invention is that metallic and amine urethane catalysts are not necessary and can be omitted. In some embodiments, therefore, the polyurethane (and the prepolymer or quasi-prepolymer, if prepared) is made in the substantial absence of such a urethane catalyst. In particular embodiments, the reaction mixture in each of the reaction steps, as well as the polyurethane reaction product, contains no more than 20 parts by weight per million parts by weight reaction mixture (ppm) of zinc, tin and mercury combined and more preferably no more than 10 ppm or 5 ppm thereof, and no more than 0.1 weight percent, no more than 0.05 weight percent or no more than 0.025 weight percent, based on the weight of the reaction mixture, of amine group-containing compounds that have molecular weights below 350 (other than the alkoxylated Mannich base described herein). In such embodiments, the reaction mixture may contain no more than 0.1 weight percent, no more than 0.05 weight percent or no more than 0.025 weight percent, based on the weight of the reaction mixture, of any amine group-containing compounds other than the alkoxylated Mannich. In other particular embodiments, the reaction mixture in each of the various reaction steps preferably contains no more than 20 ppm of metals and more preferably no more than 10 ppm or 5 ppm thereof, and in addition contains no more than 0.1 weight percent, no more than 0.05 weight percent or no more than 0.025 weight percent of amine group-containing compounds that have molecular weights of below 350 other than the alkoxylated Mannich base. In such other particular embodiments, the reaction mixture may contain no more than 0.1 weight percent, no more than 0.05 weight percent or no more than 0.025 weight percent, based on the weight of the reaction mixture, of any amine group-containing compounds other than the alkoxylated Mannich base. The polyurethane of the invention preferably contains correspondingly low amounts of such metals and such low molecular weight, non-isocyanate-reactive amine group-containing compounds.

The polyurethane has a density of at least 750 kg/$m^3$, preferably 900 kg/$m^3$, and more preferably at least 1000 kg/$m^3$. It is preferably non-cellular or microcellular, having a void volume of at most 25%, at most 10%, at most 5%, at most 2%, at most 1% or at most 0.5%. In some embodiments, the final curing step is performed in the absence of water and a physical blowing agent. In especially preferred embodiments, the final curing step is also performed in the absence of entrained gas. For example, a step of degassing the reactants used in the final curing step can be performed to remove entrained gasses therefrom prior to the final curing step.

If desired, a small amount of physical blowing agent and/or entrained gas may be present during the final curing step to reduce density, as when a microcellular polyurethane is to be produced. Air, carbon dioxide, nitrogen or other gas can be whipped into the reaction mixture of the final curing step to form a froth, which is cured to form a microcellular elastomer.

The various reaction steps can be performed within a temperature range of somewhat below room temperature (such as 0°C or more but preferably at least 10°C or at least 15°C) to as much as 120°C. If a prepolymer-forming step is performed before the final curing step, it is generally advantageous to use an elevated temperature such as at least 50°C and, for example, up to 90°C, up to 80°C or up to 70°C during the prepolymer manufacturing step. A final curing

step is often performed at ambient or a slightly elevated temperature (such as 10°C to 45°C, especially 15°C to 35°C), particularly in the case in which the final polyurethane product is a cured adhesive, sealant or coating. A final curing step may be performed at elevated temperatures such as described for the prepolymer-forming step; it is often advantageous to use such a somewhat higher curing temperature, especially when making molded or coated products, to speed the cure and reduce cycle time on production equipment.

When a prepolymer-forming step is performed, the reaction is typically continued until a constant isocyanate content is achieved, indicating the consumption of all of the isocyanate-reactive compounds. The final curing step is generally continued until the polyurethane has achieved constant mechanical properties. The final curing step may be continued, for example, for at least 5 minutes, or at least 30 minutes, and up to 7 days or even longer, although shorter curing times such as up to 3 hours or up to 2.5 hours are generally preferred, especially when making molded parts or coating, from the standpoint of achieving commercially reasonable reaction rates and increasing equipment utilization. The final curing step may be performed under superatmospheric pressure such as at least 2000 psi (13.8 MPa) or greater, to prevent cell formation and form a dense product. A molded polyurethane may be cured in a mold until it has developed enough green strength to be demolded without damage or permanent distortion; in such cases the polyurethane may be post-cured at ambient and/or elevated temperatures as just described to further complete the cure and develop mechanical and other properties.

The reaction mixture in the final curing step may contain various optional ingredients. These include, for example, plasticizers (both reactive and non-reactive), diluents, dispersing agents, flame retardants, colorants such as pigments and dyes; particulate reinforcing agents and fillers such as various clays, calcium carbonate, silica, quartz, alumina, talc, wollastonite, mica, carbon black, graphite and other particulate carbonaceous materials, titanium dioxide, ferric oxide, chromium oxide, ground thermoset polymers and the like (it being noted that certain of these reinforcing agents will also function as colorants); short reinforcing fibers (having lengths, for example of about 2 to about 150 mm) antifoaming agents; mold release agents; antimicrobials and other preservatives; adhesion promoters such as reactive silanes; antioxidants, and the like.

When making a molded or shaped cast elastomer product, curing may take place in a mold or other form, which may be open or closed. It may be performed on a belt or other apparatus. The reaction mixture may be formed into a layer on a substrate and cured thereon to form a composite. The reaction mixture might be used to impregnate a fibrous material and then be cured in place to form a fiber-reinforced composite.

If desired, the reaction mixture in the final curing step can be applied to a substrate to form a multilayer structure. It is also within the scope of the invention to impregnate a fibrous substrate such as a mat of reinforcing fibers with the reaction mixture in the final curing step and then to cure the reaction mixture to form a fiber-reinforced composite.

Polyurethanes made in accordance with the invention are in certain embodiments characterized in being flexible materials having an elongation (when dry) to break of at least 40% as measured according to ASTM D1708. The elongation may be at least 100%, at least 150% or at least 200%. Its tensile strength may be at least 5 KPa, at least 10 KPa or at least 20 KPa. In some embodiments the polyurethane may have a glass transition temperature ($T_g$) of at most 0°C as measured by dynamic mechanical analysis using the peak of the tan delta curve as the $T_g$.

The polyurethane of the invention often exhibits excellent thermal properties. These are manifested by comparing the storage moduli of the polyurethane, as measured by dynamic mechanical analysis in the manner described in the following examples, at 150°C and 200°C. An advantage of this invention is that the absolute values of the storage moduli tend to be high (at a given % hard segment) at 150°C, and in that there is 7little loss of storage modulus when the polyurethane is further heated to 200°C.

In specific embodiments, the storage modulus at 150°C is at least $5 \times 10^7$ Pa, at least $7.5 \times 10^7$ Pa or at least $9.0 \times 10^7$ Pa, and the ratio of the storage modulus at 200°C to that at 150°C is at least 0.75 or at least 0.85. In some embodiments this ratio is at least 0.90.

A cast elastomer product of the invention may be a static or dynamic type, static elastomers being products that are not subjected to frequent deformation during use (such as gasketing materials and certain types of rollers) and dynamic elastomers being products that are subjected to frequent deformation as they are used. The elastomer of the invention is useful, for example, as gaskets and seals, tubing, rollers for many applications such as coating rollers, nip rollers, drive belts, squeeze rollers, business machine rollers, pulleys, conveyor wheels, fork truck wheels, tricycle wheels, caster wheels, industrial tires, rod wipers, snow plow blades, chute and cyclone liners, agitator blades and many more.

The invention is useful, for example, as a sealant or adhesive. For use as a sealant or adhesive, the reactants preferably are formulated into a two-component system, one component containing the polyisocyanate (more preferably an isocyanate-terminated prepolymer or quasi-prepolymer) and the other component containing at least one of polyol b-1) and b-2). A preferred sealant or adhesive formulation, for example, includes A) an isocyanate component comprising an isocyanate-terminated prepolymer or quasi prepolymer having an isocyanate content of at least 1%, at least 2.5% or at least 4% by weight up to 20% by weight, up to 15%, up to 12% or up to 10% by weight, which is a reaction product of polyol b-1) and the starting organic polyisocyanate; and B) a curative component comprising or entirely constituted by polyol b-2). A reaction mixture is formed by mixing the A) and B) components, preferably at ratios such that an

isocyanate index of at least 90, at least 95 or at least 98 to at most 150, at most 115, at most 110, at most 105 or at most 102. The resulting reaction mixture is applied to a bondline, joint, crack or other opening between two substrates (or within parts of a single substrate) and cured in place such that it adheres to the substrate or substrates and at least partially seals the opening and/or bonds the substrates together. Such an adhesive or sealant can be formulated with one or more fillers and colorants that are used to, for example, impart desired rheological and/or aesthetic characteristics. Curing is generally performed under ambient conditions, but elevated temperatures can be used.

Cured adhesives and sealants of the invention are often characterized in having a surprisingly high lap shear strength when measured according to ASTM 1002-01.

Coatings are formed by applying a reaction mixture to the surface of a substrate to form a film and curing the film on the substrate to form an adherent coating, the adherent coating typically becoming an exposed external surface of the coated substrate. The reaction mixture may contain all of components a), b-1) and b-2), which are reacted in one step to form the coating. Alternatively, the reaction mixture may contain a prepolymer or quasi-prepolymer as described before, and either or both of components b-1) and b-2). The application step is conveniently performed by methods such as spraying, brushing or rolling. Curing can be performed at ambient temperature or elevated temperature. The invention is particularly useful for producing thick protective coatings and/or to produce a soft surface. Coating compositions can be formulated to include pigments, dyes and other colorants as well as filler particles (which may also function as colorants), rheology modifiers of various types, and the like.

The following examples are provided to illustrate the invention, and are not intended to limit the scope thereof. All parts and percentages are by weight unless otherwise indicated.

**Preparation of Isocyanate-Terminated Prepolymers**

Various isocyanate-terminated prepolymers are made by reacting a 143-equivalent weight "liquid" MDI product with a polyether polyol. In each case, the polyisocyanate and polyol are combined without catalyst in a sealed dry container and stored at 70°C with occasional stirring until a constant isocyanate concentration is obtained. The characteristics of the polyether polyol and the resulting prepolymer are as indicated in Table 1.

**Table 1**

| Prepolymer | Isocyanate/ Polyol Weight Ratio | Polyol Properties | | | Prepolymer Properties | |
|---|---|---|---|---|---|---|
| | | Oxides | HEW[1] | Nominal Functionality | % NCO | I.E.[2] |
| PP-1 | 30/70 | PO | 1000 | 2 | 5.75 | 730 |
| PP-2 | 38.26/61.74 | PO | 1000 | 2 | 8.5 | 494 |
| PP-3 | 46.54/53.46 | PO | 1000 | 2 | 11.25 | 373 |
| PP-4 | 54.82/45.18 | PO | 1000 | 2 | 14.0 | 333 |
| PP-5 | 16.5/83.5 | PO | 1968 | 2 | 3.0 | 1400 |
| PP-6 | 25.3/74.7 | PO | 1968 | 2 | 5.75 | 730 |
| PP-7 | 34.15/65.85 | PO | 1968 | 2 | 8.5 | 494 |
| PP-8 | 25.2/74.8 | PO/EO cap | 2040 | 3 | 5.75 | 730 |
| PP-9 | 37.9/62.1 | PO | 500 | 2 | 5.75 | 730 |
| PP-10 | 30/70 | PO | 1002 | 3 | 5.75 | 730 |
| PP-11 | 22.7/77.3 | PO | 4007 | 2 | 5.75 | 730 |
| PP-12 | 30/70 | PO/BO | 1002 | 2 | 5.75 | 730 |
| [1]Hydroxyl equivalent weight. [2]Isocyanate equivalent weight. | | | | | | |

**Examples 1-4 and Comparative Samples A-D**

Examples 1-4 are made by mixing, at room temperature, the prepolymer indicated in Table 1 with an alkoxylated Mannich base having a hydroxyl equivalent weight of 119 and a hydroxyl functionality of 3.5, to which has been added 0.65% benzoyl chloride. The alkoxylated Mannich base is made by alkoxylating a Mannich reaction product of nonyl

phenol, formaldehyde and diethanolamine with propylene oxide and ethylene oxide. No catalyst (other than the alkoxylated Mannich base product) is present in the reaction mixture. The reaction mixture contains less than 20 ppm of metals and no amine compounds except for the alkoxylated Mannich base product. The isocyanate index is about 101. After thorough mixing, the reaction mixture is poured into a 6 in × 6 in × 0.015 in (15.24 cm × 15.24 cm × 0.38 mm) chase positioned upon a 0.38 mm aluminum plate that is coated with a mold release agent. A second aluminum plate is positioned over the filled chase. The assembly is cured for 2 hours at 60°C in a molding press under pressure. The cured samples are allowed to sit at ambient conditions (23±3°C) for one week prior to physical property testing.

Comparative Samples A-D are made in same manner, substituting a 450 number average molecular weight polypropylene oxide) triol for the alkoxylated Mannich base and adding 0.05 parts by weight (based on combined weight of prepolymer and chain extender) of an organotin catalyst.

Tensile testing is performed according to ASTM D-1708. Water aged tensile testing is performed in the same manner after immersing a pre-weighed sample in deionized water at room temperature for 7 days, removing surface water and re-weighing the sample. Results are as indicated in Table 2 for the dry samples and Table 3 for the water-aged samples.

Thermal properties of Examples 1-3 and Comparative Samples A-D are evaluated by dynamic mechanical analysis using a TA Instruments ARES G2 Rheometer operated in torsion mode at 1 Hz and a heating rate of 3°C/minute. Glass transition temperature is taken as the peak of the tan delta curve, and is reported in Table 2.

**Table 2-Dry Sample Properties**

| Sample | Prepolymer | Chain Extender | Properties | | | | |
|---|---|---|---|---|---|---|---|
| | | | Hard Segment Content, % | Tensile Str., psi (kPa) | Elong., % | Tensile Modulus, psi (kPa) | $T_g$, °C |
| 1 | PP-1 | Mannich[1] | 41.6 | 1078 | 261 | 1120 | -6 |
| A* | PP-1 | Triol | 44.1 | 745 | 248 | 431 | -10 |
| 2 | PP-2 | Mannich | 53.4 | 2649 | 211 | 1344 | 16 |
| B* | PP-2 | Triol | 56.7 | 1986 | 266 | 597 | 8 |
| 3 | PP-3 | Mannich | 63.8 | 3569 | 142 | 22354 | 37 |
| C* | PP-3 | Triol | 71.1 | 3267 | 219 | 1681 | 22 |
| 4 | PP-4 | Mannich | 72.9 | 4207 | 87 | 82427 | 55 |
| D* | PP-4 | Triol | 77.0 | 3834 | 163 | 24080 | 32 |

[1]In this and subsequent tables, "Mannich" refers to the alkoxylated Mannich base.

**Table 3-Water-Aged Sample Properties**

| Sample | Prepolymer | Chain Extender | Properties | | | |
|---|---|---|---|---|---|---|
| | | | $H_2O$ Absorption, % | Tensile Str., psi (kPa) | Elong., % | Tensile Modulus, psi (kPa) |
| 1 | PP-1 | Mannich | 1.8 | 734 | 204 | 458 |
| A* | PP-1 | Triol | 2.3 | 507 | 184 | 435 |
| 2 | PP-2 | Mannich | 1.8 | 1011 | 145 | 815 |
| B* | PP-2 | Triol | 2.1 | 885 | 181 | 579 |
| 3 | PP-3 | Mannich | 1.8 | 2272 | 130 | 6967 |
| C* | PP-3 | Triol | 2.2 | 1061 | 157 | 713 |
| 4 | PP-4 | Mannich | 1.9 | 3311 | 96 | 42123 |
| D* | PP-4 | Triol | 2.2 | 1898 | 153 | 2913 |

As the data in Tables 2 and 3 show, replacing the triol chain extender with the alkoxylated Mannich base leads

to decreases in water absorption, and increases in tensile strength and modulus at equivalent or higher elongation. These results are achieved despite the absence of a separate urethane catalyst in the examples of the invention.

The storage modulus (G') is measured for each of Examples 1-3 and Comparative Samples A-C by DMA at 150°C, 175°C and 200°C. Results are as indicated in Table 4.

**Table 4**

| Sample | Prepolymer | Chain Extender | G', Pa $\times 10^7$ | | |
|---|---|---|---|---|---|
| | | | 150±1 °C | 175±1 °C | 200±1 °C |
| 1 | PP-1 | Mannich | 9.03 | 9.00 | 7.59 |
| A* | PP-1 | Polyol | 6.17 | 2.22 | <<1 |
| 2 | PP-2 | Mannich | 9.39 | 9.54 | 8.42 |
| B* | PP-2 | Polyol | 6.38 | 5.11 | 1.62 |
| 3 | PP-3 | Mannich | 10.6 | 10.6 | 9.92 |
| C* | PP-3 | Polyol | 10.1 | 8.5 | 4.26 |

All of the Comparative Samples show a large decrease in storage modulus at temperatures above 150°C. Comparative Sample A loses over 85% of its storage modulus when heated from 150 to 200°C. Comparative Samples B and C lose about 75% and about 60% of their storage modulus over the same temperature range.

In contrast, Examples 1-3 not only have higher storage moduli at equivalent temperature (compared to Comparative Samples A-C, respectively), but also exhibit much less storage modulus loss at 175°C and 200°C. Example 1 loses only about 17% of its 150°C storage modulus when heated to 200°C; Examples 2 and 3 demonstrate even smaller losses.

These results imply improved performance and stability when articles made using the elastomers of the invention in high-temperature applications.

Lap shear testing is performed using Example 1 and Comparative Sample A. 1" × 6" × 0.2" (2.54 × 15.24 × 0.51 cm) glass coupons are cleaned with acetone and air-dried. A glass coupon is marked 2.0 inches (5.08 cm) from the end. The marked area is coating with freshly mixed reaction mixture (Ex. 1 or Comp. Sample A), together with 10 mil (0.254 mm) glass spacer beads. A second glass coupon is applied over the reaction mixture and secured with a metal clip. Edges are cleaned. Samples are allowed to cure at room temperature for one hour. The clip is removed, the samples are placed flat in a 60°C oven for 2 hours and are then held at ambient room temperature conditions for 7 days. Samples are tested according to ASTM 1002-01. The lap shear strength of Example 1 is 101 psi (696 kPa), whereas that of Comp. Sample A is only 64.5 psi (445 kPa)

**Examples 5-7 and Comparative Samples E and F**

Examples 5-7 and Comparative Samples E and F are made in the same general manner as Examples 1-4 and A-D, respectively. In each of Examples 5-7, the reaction mixture contains less than 20 ppm of metals and no amine compounds except for the alkoxylated Mannich base product. Physical property testing is performed as described with respect to the earlier examples. Results are as indicated in Tables 5 and 6.

**Table 5-Dry Sample Properties**

| Sample | Prepolymer | Chain Extender | Properties | | | | |
|---|---|---|---|---|---|---|---|
| | | | Hard Segment Content, % | Tensile Str., psi (kPa) | Elong. , % | Tensile Modulus, psi (kPa) | $T_g$, °C |
| 5 | PP-5 | Mannich | 23.7 | 352 | 252 | 211 | -43 |
| E* | PP-5 | Triol | 25.3 | 294 | 170 | 290 | -38 |
| 6 | PP-6 | Mannich | 37.6 | 894 | 190 | 909 | -37 |
| 7 | PP-7 | Mannich | 50.2 | 2242 | 154 | 3906 | -38 |
| F* | PP-7 | Triol | 53.8 | 1950 | 240 | 890 | -44 |

**Table 6-Water-Aged Sample Properties**

| Sample | Prepolymer | Chain Extender | Properties | | | |
|---|---|---|---|---|---|---|
| | | | $H_2O$ Absorption, % | Tensile Str., psi (kPa) | Elong., % | Tensile Modulus, psi (kPa) |
| 5 | PP-5 | Mannich | 1.7 | 315 | 233 | 252 |
| E* | PP-5 | Triol | 1.8 | 263 | 142 | 350 |
| 6 | PP-6 | Mannich | 1.9 | 708 | 175 | 494 |
| 7 | PP-7 | Mannich | 1.5 | 1444 | 127 | 2758 |
| F* | PP-7 | Triol | 1.9 | 849 | 177 | 612 |

As before, tensile strength is increased and moisture absorption is decreased by substituting the alkoxylated Mannich base for the polyether triol chain extender at equivalent index.

**Examples 8-12**

Examples 8-12 are made in the same general manner as Examples 1-4. In each case, the reaction mixture contains less than 20 ppm of metals and no amine compounds except for the alkoxylated Mannich base product. Physical property testing is performed as described with respect to the earlier examples. Results are as indicated in Tables 7 and 8.

**Table 7-Dry Sample Properties**

| Sample | Prepolymer | Chain Extender | Properties | | | | |
|---|---|---|---|---|---|---|---|
| | | | Hard Segment Content, % | Tensile Str., psi (kPa) | Elong., % | Tensile Modulus, psi (kPa) | $T_g$, °C |
| 8 | PP-8 | Mannich | 37.5 | 1067 | 217 | 1113 | -47 |
| 9 | PP-9 | Mannich | 48.1 | 2386 | 286 | 2606 | 14 |
| 10 | PP-10 | Mannich | 41.6 | 1160 | 197 | 1238 | -5 |
| 11 | PP-11 | Mannich | 35.5 | 822 | 209 | 818 | -52 |
| 12 | PP-12 | Mannich | 41.6 | 1150 | 213 | 602 | -8 |

**Table 8-Water-Aged Sample Properties**

| Sample | Prepolymer | Chain Extender | Properties | | | |
|---|---|---|---|---|---|---|
| | | | $H_2O$ Absorption, % | Tensile Str., psi (kPa) | Elong., % | Tensile Modulus, psi (kPa) |
| 8 | PP-8 | Mannich | 2.8 | 546 | 152 | 456 |
| 9 | PP-9 | Mannich | 2.0 | 1157 | 227 | 524 |
| 10 | PP-10 | Mannich | 1.7 | 759 | 156 | 593 |
| 11 | PP-11 | Mannich | 1.6 | 1066 | 245 | 388 |
| 12 | PP-12 | Mannich | 0.5 | 722 | 164 | 504 |

**Comparative Samples G and H**

Following the general procedure described in the preceding examples, Comparative Samples G and H are prepared by reacting PP-1 with a 700 molecular weight, trifunctional, aliphatic polypropylene oxide) (Comp. G) and a 195 equivalent weight, 3.3-functional, epoxy novolac-initiated polyether polyol (Comp. H) in the presence of an organotin

catalyst at a 101 index.

Comparative Sample H has a somewhat higher tensile strength (2.9 MPa vs. 1.95 MPa), elongation (143% vs. 112) and tensile modulus (3.3 MPa vs. 2.8 MPa) than Comparative Sample G, showing the effect of substituting an aromatic-based curative for an aliphatic curative. However, unlike the examples of the invention, Comparative Sample H exhibits a loss of at least 80% of its storage modulus when heated from about 120°C to 150°C. Storage modulus for Comparative Sample H is only about $1 \times 10^6$ Pa at 150°C. These results indicate that the excellent thermal properties of the invention are not due merely to the presence of aromatic groups in the alkoxylated Mannich base.

## Claims

1. A polyurethane polymer having a density of at least 750 kg/$m^3$ that is the reaction product of reactants that comprise:

    a) at least one organic polyisocyanate and
    b) polyols comprising

        b-1) one or more polyols having a hydroxyl equivalent weight of greater than 250 g/mol and a nominal hydroxyl functionality of 2 to 4 and
        b-2) one or more polyols having a hydroxyl equivalent weight of up to 250, wherein at least 50% by weight of b-2) is at least one alkoxylated Mannich base having an average hydroxyl functionality of 2 to 7;

    wherein the isocyanate index in a final curing step is 90 to 150; and wherein the hard segment content of the polyurethane polymer is 20 to 80% by weight of the polyurethane polymer.

2. The polyurethane polymer of claim 1 wherein the alkoxylated Mannich base is represented by the structure:

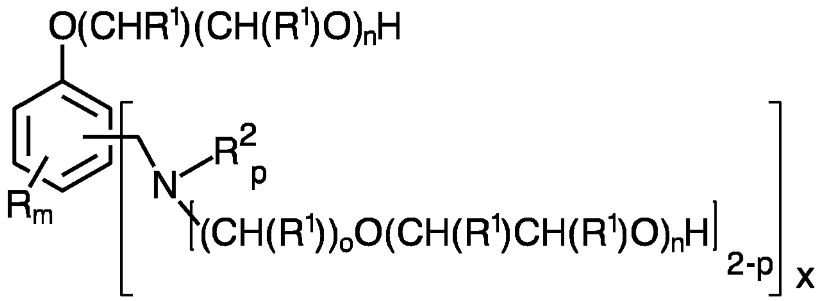

    wherein each R is independently hydrogen, linear or branched alkyl having 1 to 18 carbon atoms or linear or branched alkenyl having 1 to 18 carbon atoms, m is a number from 0 to 2, each $R^1$ is independently hydrogen or linear or branched alkyl having 1 to 6 carbon atoms, each n is a number such that the hydroxyl equivalent weight is up to 250, x is a number from 1 to 2, $R^2$ is hydrogen, alkyl having 1 to 6 carbon atoms, or phenyl, o is a number from 1 to 4 and p is 0 or 1.

3. The polyurethane polymer of claim 1 or 2, which contains no more than 10 ppm of zinc, tin and mercury combined and, except for the alkoxylated Mannich base, no more than 0.05 weight percent of amine group-containing compounds that have molecular weights below 350, based on the weight of the reaction mixture.

4. The polyurethane polymer of any preceding claim, which contains no more than 20 ppm of metals and in addition contains no more than 0.05 weight percent of amine group-containing compounds that have molecular weights of below 350 except for the alkoxylated Mannich base.

5. The polyurethane polymer of any preceding claim wherein polyol b-1) has a hydroxyl equivalent weight of at least 400.

6. A process for making a polyurethane polymer comprising reacting, in one or more steps that include a final curing step in which the isocyanate index is 90 to 150, reactants comprising

    a) at least one organic polyisocyanate; and
    b) polyols comprising b-1) at least one polyol having a hydroxyl equivalent weight of greater than 250 g/mol,

and b-2) one or more polyols having a hydroxyl equivalent weight of up to 250, wherein at least 50% by weight of b-2) is at least one alkoxylated Mannich base having an average hydroxyl functionality of 2 to 7;

wherein the hard segment content of the polyurethane polymer is 20 to 80% by weight of the polyurethane polymer and the density of the polyurethane polymer is at least 750 $kg/m^3$.

**7.** The process of claim 6 wherein the alkoxylated Mannich base is represented by the structure:

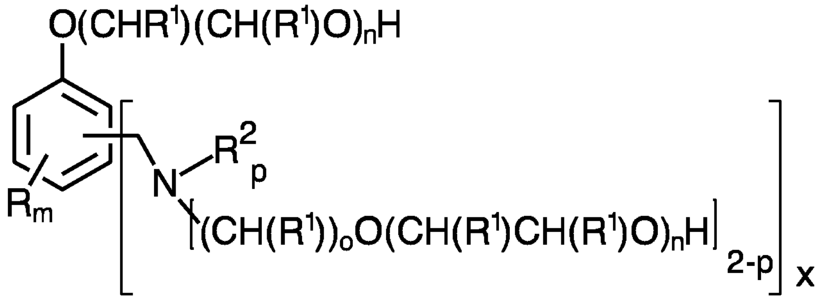

wherein each R is independently hydrogen, linear or branched alkyl having 1 to 18 carbon atoms or linear or branched alkenyl having 1 to 18 carbon atoms, m is a number from 0 to 2, each $R^1$ is independently hydrogen or linear or branched alkyl having 1 to 6 carbon atoms, each n is a number such that the hydroxyl equivalent weight is up to 250, x is a number from 1 to 2, $R^2$ is hydrogen, alkyl having 1 to 6 carbon atoms, or phenyl, o is a number from 1 to 4 and p is 0 or 1.

**8.** The process of any claims 6 or 7 wherein the final curing step is performed in the presence of no more than 10 ppm of zinc, tin and mercury combined and, except for the alkoxylated Mannich base, no more than 0.05 part by weight of amine group-containing compounds that have molecular weights below 350.

**9.** The process of any claims 6-8 wherein the final curing step is performed in the presence of no more than 20 ppm of metals and no more than 0.05 weight percent of amine group-containing compounds that have molecular weights of below 350 except for the alkoxylated Mannich base.

**10.** The process of any of claims 6-9 wherein component a) is reacted with at least a portion of component b-1) to form a prepolymer or quasi-prepolymer having an isocyanate content of 1 to 20 percent by weight and in the final curing step, the prepolymer or quasi-prepolymer is reacted with polyol b-2) and any remaining portion of polyol b-1) at an isocyanate index of 90 to 150 to produce the polyurethane.

**11.** The process of claim 10 wherein the step of reacting component a) with at least a portion of component b-1) to form a prepolymer or quasi-prepolymer is performed in the presence of no more than 20 ppm of metals and, except for the alkoxylated Mannich base, no more than 0.05 weight percent of amine group-containing compounds that have molecular weights of below 350.

**12.** The process of any of claims 6-11 wherein component b-1) has a hydroxyl equivalent weight of at least 400.

**13.** A coating, adhesive, sealant or elastomer comprising the polyurethane polymer of any of claims 1-5.

**14.** A two-component sealant or adhesive composition comprising

I. a prepolymer component comprising an isocyanate-terminated prepolymer or quasi-prepolymer having an isocyanate content of 1 to 20 percent by weight, the prepolymer or quasi-prepolymer being a reaction product of

a) at least one organic polyisocyanate having an isocyanate equivalent weight of 80 to 250 and
b-1) one or more polyols having a hydroxyl equivalent weight of greater than 250 g/mol and a nominal hydroxyl functionality of 2 to 4; and

II. a separately packaged a curative component comprising b-2) one or more polyols having a hydroxyl equivalent weight of up to 250, wherein at least 50% by weight of b-2) is at least one alkoxylated Mannich base having an

average hydroxyl functionality of 2 to 7.

**15.** A sealant or adhesive formed by combining components I and II of the two-component sealant or adhesive composition of claim 14 at a ratio that produces an isocyanate index of 90 to 150 to form a reaction mixture and curing the reaction mixture to form a sealant or adhesive that includes a polyurethane polymer corresponding to the reaction product of components I and II, the polyurethane polymer having a hard segment content of 20 to 80% by weight.

**Patentansprüche**

**1.** Polyurethanpolymer, das eine Dichte von mindestens 750 kg/$m^3$ aufweist, das das Reaktionsprodukt von Reaktanten ist, die umfassen:

a) mindestens ein organisches Polyisocyanat und
b) Polyole, umfassend

b-1) ein oder mehrere Polyole, die ein Hydroxyläquivalentgewicht von mehr als 250 g/mol und eine nominale Hydroxylfunktionalität von 2 bis 4 aufweisen und
b-2) ein oder mehrere Polyole, die ein Hydroxyläquivalentgewicht von bis zu 250 aufweisen, wobei mindestens 50 Gew.-% von b-2) mindestens eine alkoxylierte Mannich-Base ist, die eine durchschnittliche Hydroxylfunktionalität von 2 bis 7 aufweist;
wobei der Isocyanatindex in einem abschließenden Härtungsschritt 90 bis 150 beträgt; und wobei der Hartsegmentgehalt des Polyurethanpolymers 20 bis 80 Gew.-% des Polyurethanpolymers beträgt.

**2.** Polyurethanpolymer nach Anspruch 1, wobei die alkoxylierte Mannich-Base durch die Struktur dargestellt wird:

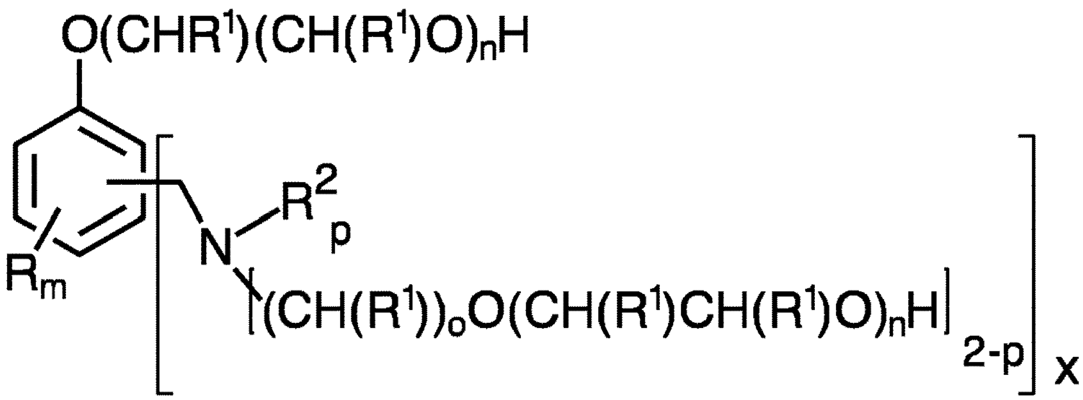

wobei jedes R unabhängig Wasserstoff, lineares oder verzweigtes Alkyl, das 1 bis 18 Kohlenstoffatome aufweist, oder lineares oder verzweigtes Alkenyl ist, das 1 bis 18 Kohlenstoffatome aufweist, m eine Zahl von 0 bis 2 ist, jedes $R^1$ unabhängig Wasserstoff oder lineares oder verzweigtes Alkyl ist, das 1 bis 6 Kohlenstoffatome aufweist, jedes n eine Zahl derartige ist, dass das Hydroxyläquivalentgewicht bis zu 250 beträgt, x eine Zahl von 1 bis 2 ist, $R^2$ Wasserstoff, Alkyl, das 1 bis 6 Kohlenstoffatome aufweist, oder Phenyl ist, o eine Zahl von 1 bis 4 ist und p 0 oder 1 ist.

**3.** Polyurethanpolymer nach Anspruch 1 oder 2, das nicht mehr als 10 ppm Zink, Zinn und Quecksilber kombiniert und mit Ausnahme der alkoxylierten Mannich-Base nicht mehr als 0,05 Gew.-% amingruppenhaltige Verbindungen, die Molekulargewichte unter 350 aufweisen, bezogen auf das Gewicht der Reaktionsmischung, enthält.

**4.** Polyurethanpolymer nach einem der vorstehenden Ansprüche, das nicht mehr als 20 ppm Metalle enthält und zusätzlich nicht mehr als 0,05 Gew.-% amingruppenhaltige Verbindungen enthält, die Molekulargewichte unter 350, mit Ausnahme der alkoxylierten Mannich-Base, aufweisen.

**5.** Polyurethanpolymer nach einem der vorstehenden Ansprüche, wobei das Polyol b-1) ein Hydroxyläquivalentgewicht von mindestens 400 aufweist.

**6.** Verfahren zum Herstellen eines Polyurethanpolymers, umfassend ein Reagieren, in einem oder mehreren Schritten,

die einen abschließenden Härtungsschritt einschließen, in dem der Isocyanatindex 90 bis 150 Reaktanten beträgt, umfassend

a) mindestens ein organisches Polyisocyanat; und
b) Polyole, umfassend b-1) mindestens ein Polyol, das ein Hydroxyläquivalentgewicht von mehr als 250 g/mol aufweist, und b-2) ein oder mehrere Polyole, die ein Hydroxyläquivalentgewicht von bis zu 250 aufweisen, wobei mindestens 50 Gew.-% von b-2) mindestens eine alkoxylierte Mannich-Base ist, die eine durchschnittliche Hydroxylfunktionalität von 2 bis 7 aufweist;
wobei der Hartsegmentgehalt des Polyurethanpolymers 20 bis 80 Gew.-% des Polyurethanpolymers beträgt und die Dichte des Polyurethanpolymers mindestens 750 kg/$m^3$ beträgt.

**7.** Verfahren nach Anspruch 6, wobei die alkoxylierte Mannich-Base durch die Struktur dargestellt wird:

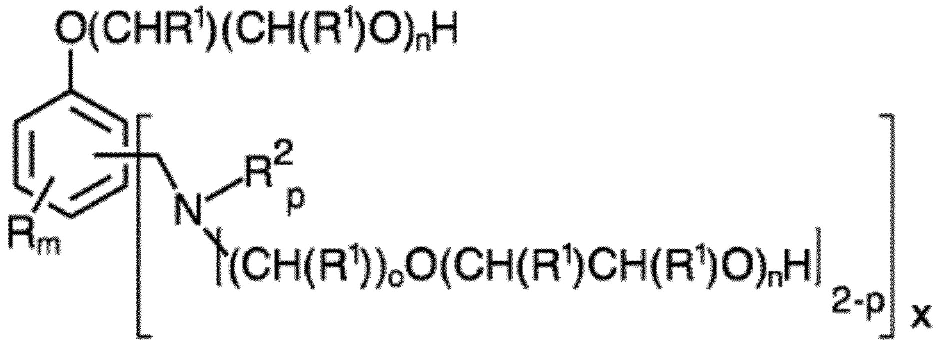

wobei jedes R unabhängig Wasserstoff, lineares oder verzweigtes Alkyl, das 1 bis 18 Kohlenstoffatome aufweist, oder lineares oder verzweigtes Alkenyl ist, das 1 bis 18 Kohlenstoffatome aufweist, m eine Zahl von 0 bis 2 ist, jedes $R^1$ unabhängig Wasserstoff oder lineares oder verzweigtes Alkyl ist, das 1 bis 6 Kohlenstoffatome aufweist, jedes n eine Zahl derartige ist, dass das Hydroxyläquivalentgewicht bis zu 250 beträgt, x eine Zahl von 1 bis 2 ist, $R^2$ Wasserstoff, Alkyl, das 1 bis 6 Kohlenstoffatome aufweist, oder Phenyl ist, o eine Zahl von 1 bis 4 ist und p 0 oder 1 ist.

**8.** Verfahren nach einem der Ansprüche 6 oder 7, wobei der abschließende Härtungsschritt in der Gegenwart von nicht mehr als 10 ppm Zink, Zinn und Quecksilber kombiniert und mit Ausnahme der alkoxylierten Mannich-Base nicht mehr als 0,05 Gewichtsteile amingruppenhaltige Verbindungen, die Molekulargewichte unter 350 aufweisen, enthält.

**9.** Vorgang nach einem der Ansprüche 6 bis 8, wobei der abschließende Härtungsschritt in der Gegenwart von nicht mehr als 20 ppm Metallen und nicht mehr als 0,05 Gew.-% amingruppenhaltigen Verbindungen durchgeführt wird, die Molekulargewichte unter 350, mit Ausnahme der alkoxylierten Mannich-Base, aufweisen.

**10.** Verfahren nach einem der Ansprüche 6 bis 9, wobei die Komponente a) mit mindestens einem Anteil der Komponente b-1) reagiert wird, um ein Präpolymer oder ein Quasi-Präpolymer auszubilden, das einen Isocyanatgehalt von 1 bis 20 Gew.-% aufweist, und in dem abschließenden Härtungsschritt, das Präpolymer oder das Quasi-Präpolymer mit Polyol b-2) und einem beliebigen verbleibenden Anteil von Polyol b-1) bei einem Isocyanatindex von 90 bis 150 reagiert wird, um das Polyurethan zu produzieren.

**11.** Verfahren nach Anspruch 10, wobei der Schritt des Reagierens von Komponente a) mit mindestens einem Anteil der Komponente b-1), um ein Präpolymer oder ein Quasi-Präpolymer auszubilden, in der Gegenwart von nicht mehr als 20 ppm Metallen und, mit Ausnahme der alkoxylierten Mannich-Base, nicht mehr als 0,05 Gew.-% amingruppenhaltigen Verbindungen durchgeführt wird, die Molekulargewichte unter 350 aufweisen.

**12.** Verfahren nach einem der Ansprüche 6 bis 11, wobei die Komponente b-1) ein Hydroxyläquivalentgewicht von mindestens 400 aufweist.

**13.** Beschichtung, Klebstoff, Dichtstoff oder Elastomer, umfassend das Polyurethanpolymer nach einem der Ansprüche 1 bis 5.

**14.** Zweikomponenten-Dichtstoff- oder Klebstoffzusammensetzung, umfassend

I. eine Präpolymerkomponente, umfassend ein Isocyanat-terminiertes Präpolymer oder ein Quasi-Präpolymer, das einen Isocyanatgehalt von 1 bis 20 Gew.-% aufweist, wobei das Präpolymer oder das Quasi-Präpolymer ein Reaktionsprodukt ist von

a) mindestens einem organischen Polyisocyanat, das ein Isocyanatäquivalentgewicht von 80 bis 250 aufweist, und
b-1) einem oder mehreren Polyolen, die ein Hydroxyläquivalentgewicht von mehr als 250 g/mol und eine nominale Hydroxylfunktionalität von 2 bis 4 aufweisen; und

II. eine separat verpackte kurative Komponente, umfassend b-2) ein oder mehrere Polyole, die ein Hydroxyläquivalentgewicht von bis zu 250 aufweisen, wobei mindestens 50 Gew.-% von b-2) mindestens eine alkoxylierte Mannich-Base ist, die eine durchschnittliche Hydroxylfunktionalität von 2 bis 7 aufweist.

**15.** Dichtstoff oder Klebstoff, der durch ein Kombinieren von Komponenten I und II der Zweikomponenten-Dichtstoff- oder Klebstoffzusammensetzung nach Anspruch 14 in einem Verhältnis, das einen Isocyanatindex von 90 bis 150 produziert, um eine Reaktionsmischung auszubilden, und ein Härten der Reaktionsmischung ausgebildet wird, um einen Dichtstoff oder Klebstoff auszubilden, der ein Polyurethanpolymer einschließt, das dem Reaktionsprodukt von Komponenten I und II entspricht, wobei das Polyurethanpolymer einen Hartsegmentgehalt von 20 bis 80 Gew.-% aufweist.

**Revendications**

**1.** Polymère de polyuréthane ayant une masse volumique d'au moins 750 kg/$m^3$ qui est le produit de réaction de réactifs qui comprennent :

a) au moins un polyisocyanate organique et
b) des polyols comprenant

b-1) un ou plusieurs polyols ayant un poids équivalent d'hydroxyle supérieur à 250 g/mol et une fonctionnalité hydroxyle nominale de 2 à 4 et
b-2) un ou plusieurs polyols ayant un poids équivalent d'hydroxyle allant jusqu'à 250, dans lequel au moins 50 % en poids de b-2) est au moins une base de Mannich alcoxylée ayant une fonctionnalité hydroxyle moyenne de 2 à 7 ;
dans lequel l'indice d'isocyanate dans une étape de durcissement finale est de 90 à 150 ; et dans lequel la teneur en segment dur du polymère de polyuréthane est de 20 à 80 % en poids du polymère de polyuréthane.

**2.** Polymère de polyuréthane selon la revendication 1, dans lequel la base de Mannich alcoxylée est représentée par la structure :

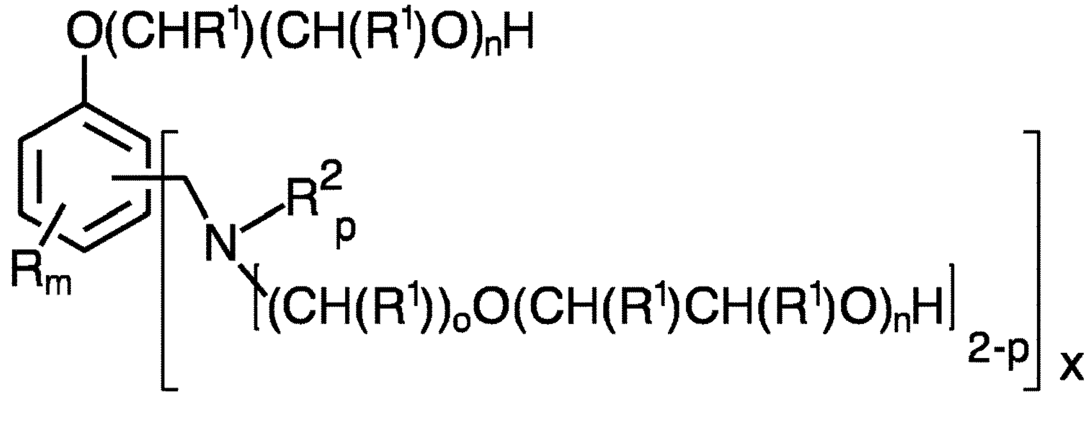

dans laquelle chaque R est indépendamment hydrogène, alkyle linéaire ou ramifié ayant 1 à 18 atomes de carbone

ou alcényle linéaire ou ramifié ayant 1 à 18 atomes de carbone, m est un nombre allant de 0 à 2, chaque $R^1$ est indépendamment hydrogène ou alkyle linéaire ou ramifié ayant 1 à 6 atomes de carbone, chaque n est un nombre tel que le poids équivalent d'hydroxyle va jusqu'à 250, x est un nombre allant de 1 à 2, $R^2$ est hydrogène, alkyle ayant 1 à 6 atomes de carbone, ou phényle, o est un nombre allant de 1 à 4 et p vaut 0 ou 1.

**3.** Polymère de polyuréthane selon la revendication 1 ou 2, qui ne contient pas plus de 10 ppm de zinc, d'étain et de mercure combinés et, à l'exception de la base de Mannich alcoxylée, pas plus de 0,05 pour cent en poids de composés contenant un groupe amine qui ont des masses moléculaires inférieures à 350, sur la base du poids du mélange réactionnel.

**4.** Polymère de polyuréthane selon l'une quelconque revendication précédente, qui ne contient pas plus de 20 ppm de métaux et de plus ne contient pas plus de 0,05 pour cent en poids de composés contenant un groupe amine qui ont des masses moléculaires inférieures à 350, à l'exception de la base de Mannich alcoxylée.

**5.** Polymère de polyuréthane selon l'une quelconque revendication précédente, dans lequel le polyol b-1) a un poids équivalent d'hydroxyle d'au moins 400.

**6.** Procédé de fabrication d'un polymère de polyuréthane comprenant la réaction, dans une ou plusieurs étapes qui comportent une étape de durcissement finale dans laquelle l'indice d'isocyanate est de 90 à 150, de réactifs comprenant

a) au moins un polyisocyanate organique ; et
b) des polyols comprenant b-1) au moins un polyol ayant un poids équivalent d'hydroxyle supérieur à 250 g/mol, et b-2) un ou plusieurs polyols ayant un poids équivalent d'hydroxyle allant jusqu'à 250, dans lequel au moins 50 % en poids de b-2) est au moins une base de Mannich alcoxylée ayant une fonctionnalité hydroxyle moyenne de 2 à 7 ;
dans lequel la teneur en segment dur du polymère de polyuréthane est de 20 à 80 % en poids du polymère de polyuréthane et la masse volumique du polymère de polyuréthane est d'au moins 750 kg/$m^3$.

**7.** Procédé selon la revendication 6, dans lequel la base de Mannich alcoxylée est représentée par la structure :

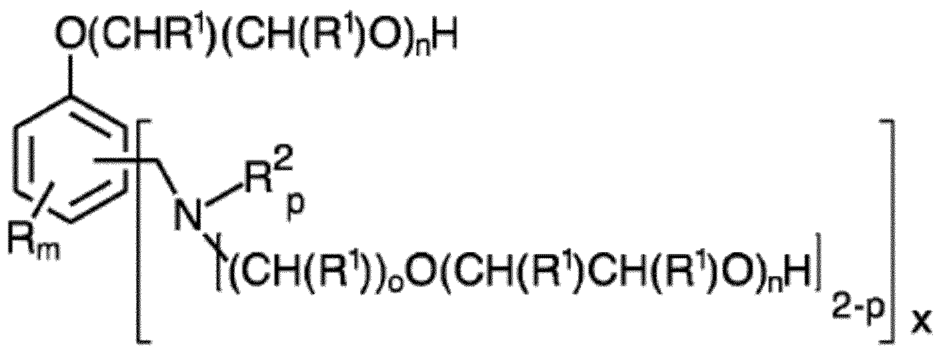

dans laquelle chaque R est indépendamment hydrogène, alkyle linéaire ou ramifié ayant 1 à 18 atomes de carbone ou alcényle linéaire ou ramifié ayant 1 à 18 atomes de carbone, m est un nombre allant de 0 à 2, chaque $R^1$ est indépendamment hydrogène ou alkyle linéaire ou ramifié ayant 1 à 6 atomes de carbone, chaque n est un nombre tel que le poids équivalent d'hydroxyle va jusqu'à 250, x est un nombre allant de 1 à 2, $R^2$ est hydrogène, alkyle ayant 1 à 6 atomes de carbone, ou phényle, o est un nombre allant de 1 à 4 et p vaut 0 ou 1.

**8.** Procédé selon l'une quelconque des revendications 6 ou 7, dans lequel l'étape de durcissement finale est effectuée en présence de pas plus de 10 ppm de zinc, d'étain et de mercure combinés et, à l'exception de la base de Mannich alcoxylée, de pas plus de 0,05 partie en poids de composés contenant un groupe amine qui ont des masses moléculaires inférieures à 350.

**9.** Procédé selon l'une quelconque des revendications 6 à 8, dans lequel l'étape de durcissement finale est effectuée en présence de pas plus de 20 ppm de métaux et de pas plus de 0,05 pour cent en poids de composés contenant un groupe amine qui ont des masses moléculaires inférieures à 350, à l'exception de la base de Mannich alcoxylée.

**10.** Procédé selon l'une quelconque des revendications 6 à 9, dans lequel le composant a) est mis à réagir avec au moins une partie du composant b-1) pour former un prépolymère ou quasi-prépolymère ayant une teneur en isocyanate de 1 à 20 pour cent en poids et dans l'étape de durcissement finale, le prépolymère ou quasi-prépolymère est mis à réagir avec le polyol b-2) et toute partie restante du polyol b-1) à un indice d'isocyanate de 90 à 150 pour produire le polyuréthane.

**11.** Procédé selon la revendication 10, dans lequel l'étape de réaction du composant a) avec au moins une partie du composant b-1) pour former un prépolymère ou quasi-prépolymère est effectuée en présence de pas plus de 20 ppm de métaux et, à l'exception de la base de Mannich alcoxylée, de pas plus de 0,05 pour cent en poids de composés contenant un groupe amine qui ont des masses moléculaires inférieures à 350.

**12.** Procédé selon l'une quelconque des revendications 6 à 11, dans lequel le composant b-1) a un poids équivalent d'hydroxyle d'au moins 400.

**13.** Revêtement, adhésif, agent d'étanchéité ou élastomère comprenant le polymère de polyuréthane selon l'une quelconque des revendications 1 à 5.

**14.** Composition d'agent d'étanchéité ou d'adhésif à deux composants comprenant

I. un composant de prépolymère comprenant un prépolymère ou quasi-prépolymère à terminaison isocyanate ayant une teneur en isocyanate de 1 à 20 pour cent en poids, le prépolymère ou quasi-prépolymère étant un produit de réaction de

a) au moins un polyisocyanate organique ayant un poids équivalent d'isocyanate de 80 à 250 et
b-1) un ou plusieurs polyols ayant un poids équivalent d'hydroxyle supérieur à 250 g/mol et une fonctionnalité hydroxyle nominale de 2 à 4 ; et

II. un composant de durcissement conditionné séparément comprenant b-2) un ou plusieurs polyols ayant un poids équivalent d'hydroxyle allant jusqu'à 250, dans lequel au moins 50 % en poids de b-2) est au moins une base de Mannich alcoxylée ayant une fonctionnalité hydroxyle moyenne de 2 à 7.

**15.** Agent d'étanchéité ou adhésif formé par combinaison des composants I et II de la composition d'agent d'étanchéité ou d'adhésif à deux composants selon la revendication 14, à un rapport qui produit un indice d'isocyanate de 90 à 150 pour former un mélange réactionnel et durcissement du mélange réactionnel pour former un agent d'étanchéité ou adhésif qui comporte un polymère de polyuréthane correspondant au produit de réaction des composants I et II, le polymère de polyuréthane ayant une teneur en segment dur de 20 à 80 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3655619 A
- GB 1150508 A
- US 5059670 A